# EUROPEAN PATENT APPLICATION

(11) **EP 3 588 425 A1**
(43) Date of publication of application: **01.01.2020**
(21) Application number: 18757675.6
(22) Date of filing: 14.02.2018
(51) Int. Cl.: G06Q 50/10, G06Q 10/02

(54) **TURN MANAGEMENT SYSTEM, TURN MANAGEMENT DEVICE, AND PROGRAM**

(30) Priority: 24.02.2017 JP 2017033456
(71) Applicant: Recruit Co., Ltd., Chuo-ku Tokyo 1040061 (JP)
(72) Inventor: WATASE, Takehiro, Tokyo 100-6640 (JP); SHINTANI, Akinori, Tokyo 100-6640 (JP)
(74) Representative: EIP
(86) International application number: PCT/JP2018/004954
(87) International publication number: WO 2018/155263

(57) **Abstract**

The purpose of the present invention is to avoid the occurrence of a waiting time for queue registration during busy hours. A queue management system (1000) configured to manage a queue of users waiting their turn at a facility includes: a registration acceptance unit (210) which accepts a queue registration operation at the facility; a queue management unit (120) which manages a waiting list of the facility based on the queue registration operation; a registration waiting headcount determination unit (210) which determines whether the number of users waiting for queue registration becomes a fixed number or more; and a queue management mode switching unit (210) which switches from a normal queue management mode to a busy-time queue management mode, in which the queue registration operation is simplified, when it is determined that the number of users waiting for queue registration becomes the fixed number or more.

## Description

### Cross-Reference to Related Application

This application is based on Japanese Patent Application No. 2017-33456, filed on February 24, 2017, which is incorporated by reference in the description here.

### Technical Field

The present invention relates to a queue management system, a queue management device, and a program.

### Background Art

Conventionally, various queue management systems have been adopted at restaurants, stores, clinics, banks, government offices, and the like to manage a queue of customers waiting their turn for the services.

For example, at a popular restaurant or the like, a restaurant-specific reservation form is prepared to write the name of each person who makes a reservation and headcount in order to manage a queue of customers (for example, see Patent Document 1 (particularly, paragraph Nos. 0003 to 0007)).

### Citation List

### Patent Document

Patent Document 1: Japanese Patent Application Laid-Open No. 2004-94380

### Summary

### Technical Problem

In the conventional queue management systems, since each person who makes a reservation is required to fill in a name and headcount on a reservation form upon registration in a queue, people may queue up to fill out the reservation form during busy hours, causing a waiting time for registration in the queue.

The present invention has been made in view of the above-described circumstances, and it is one object thereof to avoid the occurrence of a waiting time for registration in a queue during busy hours.

### Solution to Problem

A queue management system according to one embodiment of the present invention is a queue management system configured to manage a queue of users waiting their turn at a facility, including:
a registration acceptance unit which accepts a queue registration operation at the facility;
a queue management unit which manages a waiting list of the facility based on the queue registration operation;
a registration waiting headcount determination unit which determines whether the number of users waiting for queue registration becomes a fixed number or more; and
a queue management mode switching unit which switches from a normal queue management mode to a busy-time queue management mode, in which the queue registration operation is simplified, when it is determined that the number of users waiting for queue registration becomes the fixed number or more.

The registration waiting headcount determination unit may determine that the number of users waiting for queue registration becomes the fixed number or more when it is detected that there are a fixed number of people or more within a range of a fixed distance from a terminal, on which the queue registration operation is performed, based on a picture around the terminal.

The registration waiting headcount determination unit may also determine that the number of users waiting for queue registration becomes the fixed number or more when it is detected that a fixed number of mobile terminals or more performing wireless communication are present around a terminal on which the queue registration operation is performed.

The registration waiting headcount determination unit may further determine that the number of users waiting for queue registration becomes the fixed number or more when a fixed number of queue registrations or more are accepted within a fixed time in the normal queue management mode.

When a person is detected by a sensor for registration management in the busy-time queue management mode, the queue management unit may newly register one waiting group in the waiting list.

Further, when a person is detected by a sensor for guide management in the busy-time queue management mode, the queue management unit may update, to guided, the status of one waiting group in the waiting list.

### Advantageous Effect of Invention

According to the present invention, the occurrence of a waiting time for queue registration during busy hours can be avoided.

### Brief Description of Drawings

Fig. 1 is a diagram illustrating a schematic configuration of a queue management system 1000 according to an embodiment of the present invention.
Fig. 2 is a block diagram illustrating a main configuration of a queue management terminal 200.
Fig. 3 is a flowchart of normal queue reception registration processing in the queue management system 1000 according to the embodiment of the present invention.
Fig. 4 is a flowchart of busy-time queue reception registration processing in the queue management system 1000 according to the embodiment of the present invention.
Fig. 5 is a diagram illustrating a busy-time reception screen in the queue management system 1000 according to the embodiment of the present invention.

### Description of Embodiment

An embodiment of the present invention will be described in detail below with reference to the accompanying drawings. Note that the same element is given the same reference numeral to omit redundant description.

In the embodiment, an example of queue management for admission to an event site A will be described, but the present invention can be applied to all kinds of facilities at which a queue of users of the facilities are managed, such as restaurants, clinics, banks, government offices, shopping malls, department stores, and amusement facilities.

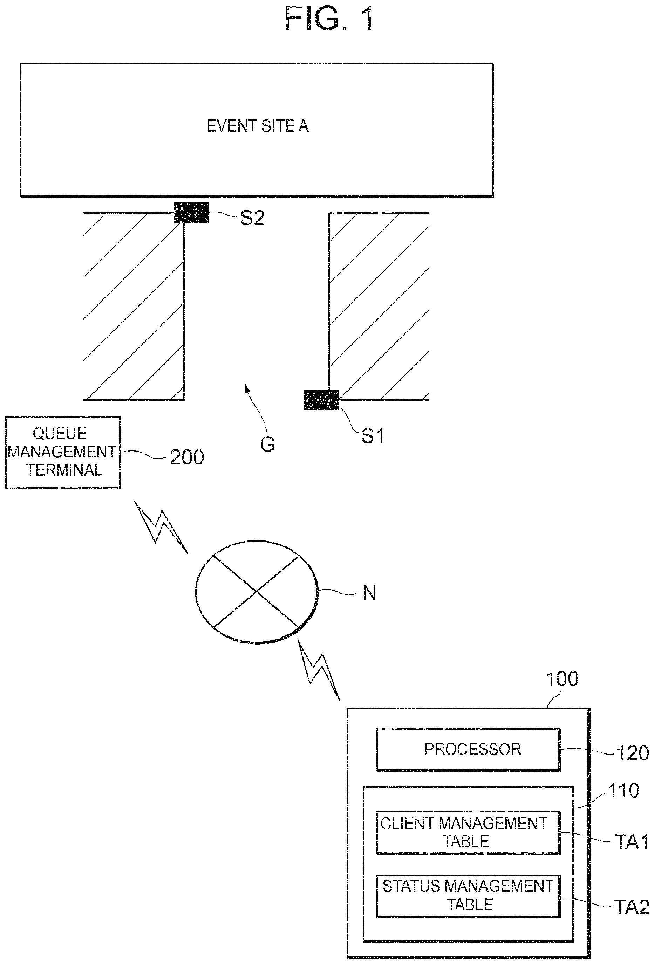

Fig. 1 is a diagram illustrating a schematic configuration of a queue management system 1000 according to the embodiment. As illustrated in Fig. 1, the queue management system 1000 includes a queue management server 100 installed in a control center or the like, a queue management terminal 200 placed outside of a gate G through which people passes to enter the event site A, a sensor (sensor for registration management) S1 placed at an entrance to the gate G, and a sensor (sensor for guide management) S2 placed at an exit from the gate G. The queue management server 100 is connected to the queue management terminal 200 and the sensors S1, S2 through a communication network N.

After reception registration on the queue management terminal 200, users (visitors at the event site A) enter inside of the gate G, and when their turn comes, the users can pass through the gate G to enter the event site A. The sensors S1, S2 are infrared sensors or the like capable of detecting the presence of people, which detect each user who enters the gate G and exits from the gate G, respectively.

The queue management server 100 manages a queue to be registered through the queue management terminal 200 for each facility. In the example of Fig. 1, although only the queue management terminal 200 for one facility is illustrated, the queue management server 100 is actually connected to queue management terminals 200 placed in a plurality of facilities through the communication network to manage the queue at each facility. The queue management server 100 is configured by a general-purpose computer to run a predetermined server program on the computer so as to implement the server function. The computer constituting the queue management server 100 is not necessarily one computer, and the queue management server 100 may also be composed of a plurality of computers distributed in the communication network N.

The queue management server 100 includes a management database 110 for managing the queue management terminal 200 for each facility, and a processor (queue management unit) 120. The management database 110 includes a client management table TA1 and a status management table TA2.

In the client management table TA1, unique ID and passcode (account) assigned to the queue management terminal 200 is registered for each facility. For example, as a record of "event site A," "ID: A1...," "passcode: AA2...," and the like are set. These pieces of information are set, for example, at the time of system introduction by an administrator (for example, the owner of each facility) who conducts queue management at each facility. When two or more queue management terminals 200 are used at one facility, the same ID and passcode may be used, or two or more IDs and passcodes may be used separately, for example, according to a predetermined condition(s).

In the status management table TA2, a waiting list at each facility is registered. This waiting list includes a list of people waiting their turn (groups waiting their turn) and information (status information) indicative of waiting status of each waiting group. One record of the waiting list includes information, such as Receipt Number "1," Reception Time "13:03," and Status "Call." Further, information on the type of seat (A seat, B seat, C seat, or the like) may be included as a waiting item.

Included in the status are "Waiting" as a state of a person before his/her turn comes, "Calling" as a state after letting a person know that his/her turn has come, "Guided" as a state of a person guided into the site after his/her turn came, "Canceled" as a state of a person who canceled the queue, and the like. The administrator of each facility or the like can set and change accordingly what item is set as the status.

Note that the administrator of each facility or the like can set and change information included in the waiting list accordingly. The content of the waiting list is updated based on new registration information to the waiting list and status update information (to be described in detail later) sent from the queue management terminal 200.

A processor 120 is composed of an arithmetic logic unit (such as a CPU) which processes arithmetic operations, logic operations, bit operations, and the like, and various registers to execute various programs stored in a storage means such as a ROM in order to control each unit of the queue management server 100 centrally. The processor 120 also executes a computer program (queue management application) to manage a queue in cooperation with the queue management terminal 200.

The communication network N includes a communication network(s) capable of mutually sending and receiving information between the queue management server 100 and the queue management terminal 200, and the like. The communication network N may be, for example, any of the Internet, LAN, a dedicated line, a telephone line, a corporate network, a mobile communication network, Bluetooth (registered trademark), WiFi (Wireless Fidelity), other communication networks, or combination thereof, and it does not matter whether the connection is wired or wireless.

As the queue management terminal 200, any terminal device capable of exchanging data with the queue management server 100 through the communication network N can be used, such as a tablet terminal, a personal computer (PC), a laptop PC, a smartphone, a mobile phone, or a personal digital assistant (PDA). Note that two or more queue management terminals 200 can also be used at one facility.

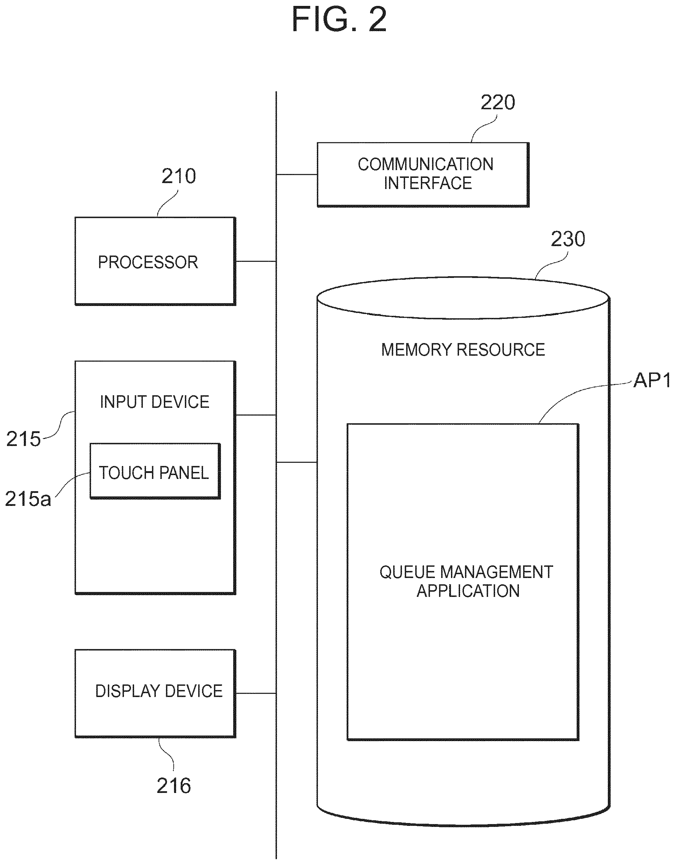

Fig. 2 is a block diagram illustrating a main configuration of the queue management terminal 200. The queue management terminal 200 includes a processor (registration acceptance unit, registration waiting headcount determination unit, queue management mode switching unit) 210, an input device 215, a display device 216, a communication interface 220, and a memory resource 230. The queue management terminal 200 accepts input such as registration or updating to the waiting list by a user or an employee of the facility directly operating the input device 215 such as a touch panel. For example, the employee of the facility performs input to register a new queue in the waiting list or to update the status registered in the waiting list.

The processor 210 is composed of an arithmetic logic unit (such as a CPU) which processes arithmetic operations, logic operations, bit operations, and the like, and various registers to execute various programs stored in the memory resource 230 in order to control each unit of the queue management terminal 200 centrally. The various registers are, for example, a program counter, a data register, an instruction register, a general-purpose register, and the like.

The input device 215 includes various operation buttons and a touch panel 215a to accept input such as reception into the waiting list, deletion from the waiting list, and the like.

The display device 216 is a device for displaying the waiting list, a reception screen, or a status management screen, which is configured, for example, by a liquid crystal display.

The communication interface 220 is a hardware module connected to the communication network N to perform communication with other devices through the communication network N. The communication interface 220 is a modulator/demodulator such as an ISDN modem, an ADSL modem, a cable modem, an optical modem, or a software modem.

The memory resource 230 is a logical device provided, for example, by a memory area of a physical device. The physical device is, for example, a computer-readable recording medium such as a disk drive or a semiconductor memory (such as a ROM or a RAM). The memory resource 230 may be constructed by mapping two or more physical devices into one logical device, or by mapping one physical device into two or more logical devices.

In the memory resource 230, an operating system program, driver programs, various data, and the like are stored. As the driver programs, for example, there are a communication interface driver program for controlling the communication interface 220, and the like. In addition to these various programs and various data, a computer program (queue management application) AP1 executed by the processor 210 to manage a queue in cooperation with the queue management server 100 is stored in the memory resource 230.

### (Switching Between Queue Management Modes)

The queue management system 1000 according to the embodiment switches between a normal queue management mode and a busy-time queue management mode depending on the crowded situation. Specifically, when the crowded degree of users waiting for reception registration is determined by the queue management terminal 200 to be a fixed value or more, switching from the normal queue management mode to the busy-time queue management mode is done. The switching determination may be made periodically or at all times.

The queue management terminal 200 may switch to the busy-time queue management mode when it is detected based on a surrounding picture acquired with an equipped camera (not illustrated) that there are a fixed number of people or more within a range of a fixed distance from the queue management terminal 200. Further, the queue management terminal 200 may acquire the number of surrounding mobile terminals (mobile terminals carried by users) in communication using WiFi or the like to switch to the busy-time queue management mode when the number of surrounding mobile terminals is a fixed number or more. Further, the queue management terminal 200 may switch to the busy-time queue management mode when a fixed number of receptions or more are registered within a fixed time in the normal queue management mode.

As will be described later, in the busy-time queue management mode, operations necessary for reception registration and status updating are simplified to reduce the time required per group so as not to cause a waiting time for reception registration as much as possible. Types of operations for changing the status are also different between the normal queue management mode and the busy-time queue management mode.

### (Queue Registration in Normal Queue Management Mode)

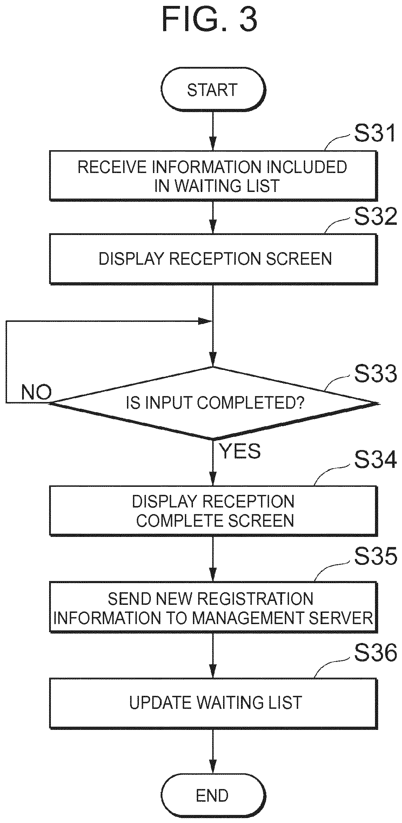

Next, queue registration processing in the normal queue management mode will be described with reference to a flowchart in Fig. 3.

The queue management terminal 200 receives information included in the waiting list registered in the status management table TA2 from the queue management server 100 through the communication interface 220 (step S31).

Next, the queue management terminal 200 displays, on the display device 216, a reception screen for reception of a queue (step S32). On the reception screen, for example, waiting list information (receipt numbers of persons waiting their turn and current status information) is displayed as a list chronologically in order of reception. In addition, the number of groups currently waiting their turn and the like are also displayed.

When each user performs predetermined operation input to the displayed reception screen and input of information (a waiting item, an email address or telephone number as contact information, and the like) necessary for queue reception is completed (step S33: YES), the queue management terminal 200 displays a reception complete screen (step S34). On the reception complete screen, a receipt number (queue number), a waiting time at present, and the like are displayed. Further, a message for urging the user to receive a queue ticket is so displayed that the user can receive the queue ticket printed out from a printer connected to the queue management terminal 200.

On the queue ticket, a two-dimensional code associated with the receipt number is printed. The user uses the mobile terminal carried by the user to read the two-dimensional code printed on the queue ticket so as to display a current waiting situation (the number of currently waiting groups, the waiting time, and the like) on a display device of the mobile terminal. Further, the user may enter an email address according to a guidance displayed by reading the two-dimensional code so that a message can be received when the user's turn has come or a reminder email can be received when the user's turn approaches.

New registration information confirmed is sent from the queue management terminal 200 to the queue management server 100 through the communication network N (step S35). When receiving new registration information from a facility, the queue management server 100 performs processing for newly adding one waiting group to the waiting list of the facility based on the new registration information received to update the status management table TA2 (step S36).

### (Queue Registration in Busy-Time Queue Management Mode)

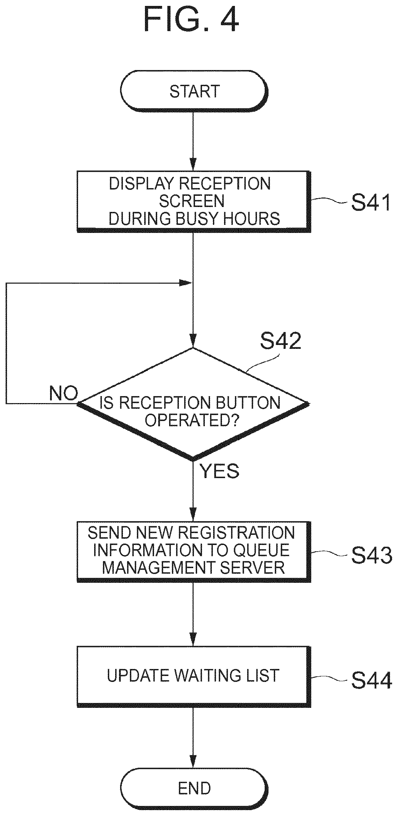

Next, queue registration processing in the busy-time queue management mode will be described with reference to a flowchart in Fig. 4.

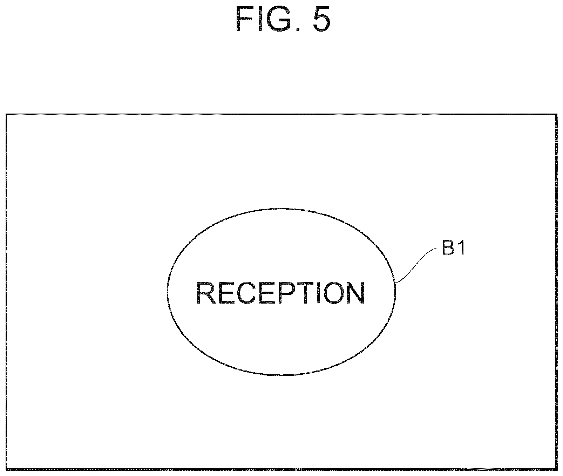

The queue management terminal 200 displays, on the display device 216, a reception screen during busy hours (step S41). As illustrated in Fig. 5, for example, a reception button B1 for queue registration is displayed on the reception screen during busy hours.

When a user performs an operation to press the reception button B1 on the displayed reception screen (step S42: YES), new registration information is sent from the queue management terminal 200 to the queue management server 100 through the communication network N (step S43). When receiving new registration information from a facility, the queue management server 100 performs processing for newly adding one waiting group to the waiting list of the facility to update the status management table TA2 (step S44).

Instead of the operation to the reception button B1, the user may be detected by the sensor S1 when the user enters the gate G. In this case, when receiving a detection signal from the sensor S1, the queue management server 100 performs processing for newly adding one waiting group to the waiting list of the facility concerned to update the status management table TA2. In the added record, only information on the receipt number, the reception time, and the status ("Waiting") is included, and the information on the waiting item, the contact information, and the like is not included unlike the normal registration processing.

### (Updating of Waiting List in Normal Queue Management Mode)

In the normal queue management mode, the content of each record of the waiting list of each facility is updated when an employee of the facility performs an operation such as "Cancel," "Change," "Call," "Guide," or the like using the queue management terminal 200. "Cancel" means canceling the queue, and "Change" means changing the content of the queue once input. Further, "Call" means a state of speaking to a group whose turn has come or letting the group know it over the phone or by a calling email, and "Guide" means a state of starting actually taking care of a group whose turn came.

From the waiting list displayed on the queue management terminal 200, the employee selects a waiting group to be updated, and performs an update operation of any one of "Call," "Cancel," and "Change" to the selected waiting group. Information for identifying the waiting group to be updated (for example, the receipt number "1") and information on the update operation (for example, "Call") are uploaded from the queue management terminal 200 to the queue management server 100 through the communication network N. The queue management server 100 updates the waiting list of the facility based on the received information. For example, when the "Call" operation is performed on the receipt number "1," the status of the waiting group with the receipt number "1" is updated to "Calling."

Note that the queue management terminal 200 operated by the employee may be a terminal for reception registration, which is placed outside of the gate G, but the queue management terminal 200 may also be a tablet terminal carried by the employee, a terminal placed near the entrance of the event site A, or the like.

### (Updating of Waiting List in Busy-Time Queue Management Mode)

In the busy-time queue management mode, an employee performs only the "Guide" operation using the queue management terminal 200. On the status management screen displayed on the display device 216 of the queue management terminal 200, for example, a guide button to perform a "Guide" operation is displayed.

When the employee performs an operation to press the guide button, status update information is sent from the queue management terminal 200 to the queue management server 100 through the communication network N. When receiving the status update information from a facility, the queue management server 100 performs processing for updating, to "Guided," the status of a group whose reception time is the earliest (oldest record) among waiting groups registered in the waiting list of the facility and on which "Guide" operation is not performed (for example, groups whose status is "Waiting" or "Calling").

As mentioned above, in the busy-time queue management mode, only the "Guide" operation is performed on the waiting groups registered in the waiting list. Further, since the email address or the telephone number as contact information is not registered upon reception registration and hence "Call" operation is not performed, calling by email or over the phone is not performed.

Instead of operating the guide button, each user may be detected by the sensor S2 when the user passes through the gate G and enters the event site A. In this case, when receiving a detection signal from the sensor S2, the queue management server 100 performs processing for updating, to "Guided," the status of the earliest waiting group registered in the waiting list of the facility concerned.

### (Providing Queue Information)

Since information to be registered in the waiting list is different between the normal queue management mode and the busy-time queue management mode, the content of queue information to be provided to each user is also changed. During normal hours, information on the number of waiting groups and a waiting time per waiting item is provided in addition to the total number of waiting groups and a waiting time, whereas during busy hours, only the total number of waiting groups and a waiting time are provided without providing information on the number of waiting groups and a waiting time per waiting item. These pieces of information can be displayed on the queue management terminal 200 or a display (not illustrated) placed near the gate G to provide the information to each user.

As described above, according to the embodiment, when it is determined by the queue management terminal 200 that the crowded degree of users waiting for reception registration becomes a fixed value or more, switching from the normal queue management mode to the busy-time queue management mode is done. In the busy-time queue management mode, since operations necessary for reception registration and status updating are simplified to reduce the time required per group, a waiting time for reception registration cannot be caused during busy hours as much as possible. The queue management terminal 200 can acquire information such as a surrounding picture, the number of mobile terminals present around the queue management terminal 200, or the number of reception registrations made within a fixed time to determine the crowded degree.

Further, when a person is detected by the sensor S1 in the busy-time queue management mode, the queue management server 100 newly registers one group waiting their turn in the waiting list, and when a person is detected by the sensor S2, the queue management server 100 updates, to "Guided," the status of the earliest waiting group registered in the waiting list, eliminating the need for each user to queue up for reception registration during busy hours. Further, the user can be guided smoothly during busy hours.

Further, in the busy-time queue management mode, when the status of one group is updated to "Guided," the next group may be called automatically. For example, even in the busy-time mode, a queue ticket may be issued to each user registered in the queue so that each group will be called in numerical order of queue tickets each time one group is guided. In this case, the queue ticket may be issued from the queue management terminal 200, or may be distributed by an employee of the event site near the gate G. As the calling method, a number to be called may be announced. Alternatively, each user may read a two-dimensional code printed on the queue ticket by using his/her mobile terminal to display the current waiting situation (whether to be called or not, or the like). Further, each user may enter a mail address according to a guidance displayed by reading a two-dimensional code so that calling email can be received. Thus, the queue ticket may be used even in the busy-time mode to call each group waiting their turn automatically so that the waiting time for reception registration can be made not to be long during busy hours. In this case, when the waiting time for admission (guiding) becomes long, there is no need for each user to stand by near the site, i.e., the user can spend the waiting time at another location. Further, automatic calling can lead to efficient guiding in order even when users are in distant places.

Note that the present invention is not limited to the above-described embodiment, and the present invention can be carried out in various other forms without departing from the scope of the present invention. Thus, the aforementioned embodiment is just an illustrative example in all aspects and not intended to limit the present invention. For example, respective processing steps described above can be changed in order arbitrarily or executed in parallel as long as the processing content does not create any contradiction.

### Reference Signs List

- 1000: queue management system
- 100: queue management server
- 110: management database
- 120: processor
- 200: queue management terminal
- 210: processor
- 215: input device
- 215a: touch panel
- 216: display device
- 220: communication interface
- 230: memory resource
- TA1: client management table
- TA2: status management table
- N: communication network
- G...: gate
- S1, S2: sensor
- AP1: queue management application
- B1: reception button

## Claims

1. A queue management system configured to manage a queue of users waiting their turn at a facility, comprising:
a registration acceptance unit which accepts a queue registration operation at the facility;
a queue management unit which manages a waiting list of the facility based on the queue registration operation;
a registration waiting headcount determination unit which determines whether the number of users waiting for queue registration becomes a fixed number or more; and
a queue management mode switching unit which switches from a normal queue management mode to a busy-time queue management mode, in which the queue registration operation is simplified, when it is determined that the number of users waiting for queue registration becomes the fixed number or more.

2. The queue management system according to claim 1, wherein the registration waiting headcount determination unit determines that the number of users waiting for queue registration becomes the fixed number or more when it is detected that there are a fixed number of people or more within a range of a fixed distance from a terminal, on which the queue registration operation is performed, based on a picture around the terminal.

3. The queue management system according to claim 1, wherein the registration waiting headcount determination unit determines that the number of users waiting for queue registration becomes the fixed number or more when it is detected that a fixed number of mobile terminals or more performing wireless communication are present around a terminal on which the queue registration operation is performed.

4. The queue management system according to claim 1, wherein the registration waiting headcount determination unit determines that the number of users waiting for queue registration becomes the fixed number or more when a fixed number of queue registrations or more are accepted within a fixed time in the normal queue management mode.

5. The queue management system according to any one of claims 1 to 4, wherein, when a person is detected by a sensor for registration management in the busy-time queue management mode, the queue management unit newly registers one waiting group in the waiting list.

6. The queue management system according to any one of claims 1 to 5, wherein, when a person is detected by a sensor for guide management in the busy-time queue management mode, the queue management unit updates, to guided, status of one waiting group in the waiting list.

7. A queue management device configured to manage a queue of users waiting their turn at a facility, comprising:
a registration acceptance unit which accepts a queue registration operation at the facility;
a registration waiting headcount determination unit which determines whether the number of users waiting for queue registration becomes a fixed number or more; and
a queue management mode switching unit which switches from a normal queue management mode to a busy-time queue management mode, in which the queue registration operation is simplified, when it is determined that the number of users waiting for queue registration becomes the fixed number or more.

8. A program causing a computer for queue management at a facility to function as:
a registration acceptance unit which accepts a queue registration operation at the facility;
a registration waiting headcount determination unit which determines whether the number of users waiting for queue registration becomes a fixed number or more; and
a queue management mode switching unit which switches from a normal queue management mode to a busy-time queue management mode, in which the queue registration operation is simplified, when it is determined that the number of users waiting for queue registration becomes the fixed number or more.
